(19) Europäisches Patentamt
European Patent Office
Office européen des brevets

(11) Publication number: 0 370 617 A1

(12) **EUROPEAN PATENT APPLICATION**

(21) Application number: 89310705.2

(22) Date of filing: 18.10.89

(51) Int. Cl.[5]: B01D 53/36, B01J 23/74, B01J 23/76, B01J 23/78

(30) Priority: 20.10.88 GB 8824543

(43) Date of publication of application: 30.05.90 Bulletin 90/22

(84) Designated Contracting States: AT BE CH DE ES FR GB GR IT LI LU NL SE

(71) Applicant: ROVER GROUP LIMITED
Fletchamstead Highway
Canley Coventry CV4 9DB(GB)

(72) Inventor: Bhattacharya, Ashok Kumar, Dr.
50 Grove Avenue
Moseley Birmingham B13 9RY(GB)

(74) Representative: Bannerman, David Gardner et al
Withers & Rogers 4 Dyer's Buildings Holborn
London, EC1N 2JT(GB)

(54) **Catalyst.**

(57) A catalyst for the purification of motor vehicle exhaust gases comprising a copper component comprising at least one copper oxide carried on a support and at least one oxide from Category (i) and/or Category (ii), which categories are defined as follows:

(i) an oxide of a metal which is a lanthanide or a metal from Group IIA and/or IIb of the Mendeleev periodic table;

(ii) an oxide of a transition metal in which the transition metal is in a first oxidation state having a second, higher, oxidation state at an energy level close to that of the first oxidation state.

EP 0 370 617 A1

# CATALYST

This invention relates to a catalyst for treating gases, and in particular to a catalyst for treating waste gases which are the products of combustion, such as motor vehicle exhaust gases.

Pollution of the atmosphere by exhaust gases from internal combustion engines is causing a great deal of public concern and many attempts have been made to eliminate pollutants such as unburnt hydrocarbons, nitrogen oxides, and carbon monoxide from such exhaust gases.

One common solution is to pass the exhaust gases through a catalyst bed intended to promote the conversion of pollutants to less harmful substances before the exhaust gases are discharged into the atmosphere. The catalytic component of such exhaust gas catalysts that are used at present consists of platinum in association with other platinum group metals. Platinum group metals are in short supply and their price is already high, and there are fears that the increasingly-widespread use of exhaust gas catalysts as a result of anti-pollution legislation will cause the cost of platinum group metals to rise still further until the cost of the exhaust gas catalyst becomes a significant proportion of the overall cost of the motor vehicle.

One objective of this invention is therefore to provide an effective exhaust gas catalyst that does not rely on a scarce and expensive material such as platinum or other platinum-group metal.

Another disadvantage of known platinum exhaust gas catalysts is that the platinum catalyst does not become effective until it reaches a temperature of around 400° C. Its "light off temperature" is therefore relatively high. Although such a temperature is achieved in the exhaust system of an engine that has reached normal running temperature, the temperature of the exhaust gases and thus also the catalyst is lower for a significant period whilst the engine is still warming up. During that time the exhaust gas catalyst is not fully effective so that untreated pollutants are discharged into the atmosphere. It is another objective of the invention to provide an exhaust gas catalyst having a lower "light off temperature" than conventional platinum catalysts, so that the period during which the catalyst is ineffective is shortened.

According to one aspect of the invention we provide a catalyst comprising at least a copper oxide component on a support, the catalyst also including at least one oxide from Category (i) and/or Category (ii), which Categories are defined as follows:

(i) an oxide of a metal which is a lanthanide and/or a metal from Groups IIa and/or IIb of the Mendeleev Periodic table;

(ii) an oxide of a transition metal in which the transition metal is in a first oxidation state having a second, higher, oxidation state at an energy level close to that of the first oxidation state.

The copper oxide component preferably contains copper atoms in different oxidation states, selected from $Cu^{\circ}$, $Cu^{I}$, $C^{II}$. It may be obtained by partial reduction of Cu0 to metallic Cu.

Examples of suitable oxides of metals from Groups IIa and IIb of the periodic table are magnesium, calcium, barium (i.e. alkaline earth metals from Group IIa) and yttrium and lanthanum (metals from Group IIb). A suitable lanthanide is cerium. The oxide may be a mixed oxide e.g. $MgAl_2 0_4$ (often referred to as magensium aluminate).

The support may preferably be finally divided alumina (e.g. - alumina).

Of the total weight of the catalyst, up to about 8% is preferably copper oxide/metallic copper, and the transition metal oxide/or Group IIa/IIb or lanthanide metal oxide preferably together comprise 8 to 12%, and the balance is preferably alumina or other support. The Cu content preferably exceeds 0.5%, e.g. about 1%-2%.

Throughout this specification, all percentages are by weight unless otherwise stated, and for metal oxide components are expressed in terms of the weight of the metal present.

The catalyst may be prepared by any convenient conventional method, such as applying a mixed solution of nitrates of copper and other metals as specified above, to finely-divided alumina or other support, and heating the resulting impregnated support to decompose the nitrates to oxides.

As outlined above, the catalyst may with advantage be subjected to partial reduction prior to use (for example by a stream of carbon monoxide) so that the copper is present in a mixture of oxidation states ($Cu^{II}$, $Cu^{I}$, Cu).

The two valency states of transition metal oxides of Category (ii) above preferably have an energy difference not greater than 0.5 eV.

Although alumina is one preferred support, other supports may also be used with advantage. Thus, the support may contain or consist of the oxide from Category (i) as defined above, e.g. a mixture of cerium oxide and barium oxide, or alternatively barium oxide alone. In such cases the support not only acts as a carrier for the copper oxide component, and possibly also an oxide from Category (ii), but it also contributes to the catalytic action. Aluminates may be used as the support, especially aluminates of an oxide from Category (i). An especially preferred examples is $MgAl_2O_4$.

According to a preferred form of the invention we provide a supported catalyst in which the catalytic material contains a copper oxide component based on CuO which is preferably partially reduced to a mixture of $Cu^{\circ}$, $Cu^{I}$, $C^{II}$ species, and a metal oxide of Category (i) and/or (ii) as hereinbefore defined and in which the support is magnesium aluminate.

In comparison with conventional platinum-based exhaust gas catalysts, the catalysts of this invention are based on comparatively common and inexpensive materials. Further, they have been found to have significantly lower "light off temperatures" than platinum-based catalysts, of the order of 200 °C as opposed to around 400 °C at all space velocities that are likely to be encountered with exhaust gases from internal combustion engines.

It is thought that the copper oxide (possibly partially reduced as described above) functions by catalysing the recombination of the nitrogen atoms that are released by the decomposition of nitrogen oxides in the exhaust gas. The rapid removal of these nitrogen atoms as atmospheric $N_2$ assists in the breakdown of the nitrogen oxides. It is thought that the transition metal oxide having two energetically-similar valency states (Category (ii) as defined above) can easily bind and shed an additional oxygen atom as follows:

$M^{n+} + O \rightleftharpoons M^{(n+1)} + O^-$

or

$M^{n+} \rightleftharpoons M^{(n+1)+} + e^-$

where M is the transition metal having two energetically closely-spaced valencies n, n+1, and e is an electron. The o atom binds to the surface of the catalyst where it can react easily with CO to form $CO_2$. The electron released thereby returns to the surface of $M^{(n+1)+}$ which is thus reconverted to $M^{n+}$. As the two valency states of the metal M are energetically very close together this reaction can proceed very easily in either direction.

Examples of suitable transition metals M and energetically-similar oxidation states thereof are:

$Co^{II}$ $Co^{III}$, $Mn^{II}$ $Mn^{III}$ and $Ni^{II}$ $Ni^{III}$

Certain transition metal oxides are not suitable for use with an alumina support, e.g. $MnO_2$.

Preferably, the catalyst will contain the transition metal in a mixture of the two closely-spaced oxidation states, but alternatively the transition metal may be in only the lower oxidation state, e.g. CoO alone.

The Group IIa/IIb/lanthanide metal oxide, e.g. barium oxide, calcium oxide, magnesium oxide, yttrium oxide, cerium (IV) oxide, (which may be partially reduced) lanthanum oxide (Category (i) as defined above) has the ability to bind loosely extra oxygen atoms, which are reactive, at its surface, so that it can act as an oxygen reservoir. Thus, when a nitrogen oxide decomposes to form N atoms and O atoms, the oxide can take up the resulting O atoms which then become available for the reaction CO + O CO $_2$. These same oxides can also take up oxygen from the atmosphere which they can then make available to assist the formation of $CO_2$ from CO.

Preferred catalysts according to the invention may comprise by weight:

| Transition metal | | |
|---|---|---|
| Cu/Cuo/$Cu_2O$ | from Category (ii) | Support |
| 8% | 12% | 80% |
| 5% | 12% | 83% |
| 2% | 12% | 86% |

These catalysts have been proved all to be effective, and are much more efficient than platinum exhaust gas catalysts at high space velocities, e.g. up to 135,000 hour $^{-1}$. At low space velocities (e.g. about 10,000 hour$^{-1}$) they are at least as effective as platinum-based catalysts.

Tests have also been carried out on the remaining efficiency of various catalysts according to the invention containing different metal oxides from Categories (i) and (ii) defined above after having been heated to 750 °C and allowed to cool to ambient temperature several times. In each case a reduced copper oxide component (i.e. a mixture of Cu/$Cu_2O$/Cuo) was used and the support was alumina or $MgAl_2O_4$.

The results of these tests have shown that, for catalysts containing certain metal oxides of Categories (i) or (ii) as defined above, the graph of conversion efficiency against temperature rose more slowly after being subjected to the heating/cooling cycles than prior to such treatment. However, even after the heating/cooling treatment the catalysts all reached maximum efficiency (100% conversion) at a lower temperature than a similar catalyst containing no Category (i) or (ii) oxides, and at a much lower temperature than the conventional platinum-based catalysts.

Of the metal oxides tested, $CeO_2$, $Y_2O_3$, CoO, Nio and $Mn_3O_4$ gave results which showed little change after the heating/cooling treatment. Certain catalysts also containing an alkaline earth metal oxide were also tested in the same way and catalysts containing BaO showed little change after the heating/cooling treatment (e.g. in comparison with catalysts containing CaO). Especially good results were obtained by the combinations $Y_2O_3$ + BaO and $CeO_2$ + BaO.

A particular preferred catalyst according to the invention comprises the copper component and NiO, on an $Al_2O_3$ or, more preferably an $MgAl_2O_4$ support. In this case, the oxide from Category (i) above is preferably Ce or Ba oxide, the former being more preferred.

Embodiments of the invention will now be described by way of example and with reference to the accompanying figures 1 to 8. These are graphs showing the results of tests carried out on a variety of catalysts. A feed gas comprising air with added quanities of NO and CO was passed through a single-stage bed of the catalyst and the percentage of the NO content removed was measured at various temperatures.

As CO is removed before the nitrogen oxides, and as nitric oxide is the most difficult nitrogen oxide to remove, monitoring of the reduction in nitric oxide content is a good measure of the effectiveness of the catalyst in removing other pollutants also. Unless otherwise indicated, the support was alumina.

In some instances tests were carried out on a freshly-made catalyst as it was gradually heated from room temperature to 750° C. On some of these occasions the test was repeated after the catalyst had been allowed to cool down to room temperature again. On other occasions tests were carried out on catalysts that had been maintained for a considerable length of time (up to 80 hours) at 750 ° C whilst the feed gas was being passed through, in order to detect any deterioration in catalytic activity over prolonged use.

Fig. 1 shows the activity of several catalysts according to the invention, based on CoO and alumina as support with the addition of the listed transition metal, alkaline earth metal, or lanthanide oxides. The feed gas contained 3.5% NO and 5.2% CO and was passed at a low space velocity of 12,000$h^{-1}$. Before measurements were taken the catalyst was treated with the feed gas for a period of 15 hours at a temperature of 750 ° C. This treatment, referred to as "ageing" has the effect of partially reducing the CuO to a mixture of metallic copper and the $Cu^{I}$ and $Cu^{II}$ oxides. For Runs 1 to 7 the catalyst contained 8% Cu and 12% of the other catalyic metal oxide, the balance being $Al_2O_3$ In the case where CeO was used, this also acted as the support and no alumina was present. For comparison a catalyst consisting of the copper component supported on alumina without the addition of oxides of other metals was also tested (Run 8). That catalyst is not within the scope of the present invention.

The catalysts containing $MnO_2$ and $MoO_3$ (Runs 4 and 6 respectively) are also outside the scope of the invention, as these transition metal oxides are not in accordance with the definition of Category (ii).

Fig. 2 shows the effect of two catalyst compositions within the invention, firstly a copper-barium oxide catalyst supported on alumina and secondly a copper-calcium oxide catalyst supported on alumina. Both of those catalysts were tested as freshly prepared (but after exposure to feed gas at 750 ° C for 8-10 hours to achieve partial reduction of the copper component), after further reduction with a stream of carbon monoxide, and after having been exposed to a feed gas for 15 hours comprising 3.5% NO, 5.2% CO (the balance being air) at a space velocity of 12,000$h^{-1}$. Although the calcium oxide-containing catalyst displayed a significantly-higher "light off temperature" (about 270° C - curve f) after being exposed to the feed gas for 15 hours at 750°C, its light off temperature was still substantially lower than that of a conventional platinum-based catalyst.

Fig. 3 shows the affect of certain catalysts within the scope of the invention at a high space velocity of feed gas (100,000h − 1) and after having been subjected to the flow of feed gas at 750 ° C over 15 hours, which ensures partial reduction of the initial CuO to a mixture of $Cu^{\circ}$, $Cu^{I}$ and $Cu^{II}$ species. In this case the feed gas contained 0.6% NO and 1.6% CO, the balance again being air. Run 2 shows the use of a specific chemical compound $Ce_{1.5}Ba_{0.5}CuO_4$.

Fig. 4, which is given by way of comparison and is not within the scope of the invention, shows the effectiveness of a CuO catalyst supported on alumina, both when freshly prepared at space velocities of 14,000$h^{-1}$ and 102,000$h^{-1}$ respectively(with a feed gas containing 0.6% NO and 1.6% CO), then after treatment at 750 °C over 15 hours at a space velocity of 102,000$h^{-1}$ (using the same feed gas) and then after treatment at 750° C over 15 hours at a space velocity of 102,000$h^{-1}$ with a feed gas containing a higher proportion of pollutants (3.5% NO and 5.1% CO). The deterioration in the effectiveness of the catalyst after prolonged exposure to the feed gas, especially the feed gas containing the lower proportion of pollutants, is very marked (Run 3).

Fig. 5 illustrates the effectiveness of a Cu-$Mn_3O_4$ catalyst (containing 8% Cu) supported on alumina, when subjected to feed gas (0.6% NO, 1.6% CO) at a high space velocity (102,000h $^{-1}$ and at 750 °C, both after being exposed to the feed gas for 15 hours (Run 1) and then after 45 hours (Run 2). Again, exposure to the feed gas ensures partial reduction of the initial CuO to a mixture of Cu, $Cu_2O$ and CuO. Only a slight deterioration in performance was observed, as indicated by a slight increase in light-off temperature, between Runs 1 and 2.

Fig. 6 illustrates the effectiveness of a Cu-$CeO_2$ catalyst (5% Cu, 12% $CeO_2$) supported on $MgAl_2O_4$, after exposure to feed gas containing 0.6% NO and 1.6% CO at 750 °C over increasing periods of time, at a space velocity of 100,000h $^{-1}$. The initial exposure to feed gas brings about partial reduction of the initial CuO to a mixture of CuO, $Cu_2O$ and Cu metal.

The graphs indicate by the series of Runs 1 to 4 how the effectiveness of the catalyst gradually deteriorates on exposure to the flow of feed gas over a period of 52 hours. However, if exposure to the hot feed gas is discontinued for a few hours, the effectiveness of the catalyst will recover fully to that shown in Run 1. Thus, in the case of an internal combustion engine of a motor vehicle, the catalyst will regain its effectiveness quite rapidly during the time that the motor is not running, e.g. overnight.

Fig. 7 shows the results of further tests carried out on a copper oxide-cerium oxide catalyst (containing 8% Cu and 12% $CeO_2$ ) supported on magnesium aluminate. The feed gas (0.6% NO, 1.6% CO) was supplied at a high space velocity (102,000h $^{-1}$).

Between successive runs the catalyst is cooled to room temperature while feed gas continues to be passed, except that Runs 9 and 10 were carried out after cooling in air. This shows how the effectiveness of the catalyst, which had deteriorated significantly by the time Run 8 was performed, recovered after being allowed to cool in air.

Fig. 8 shows the results of experiments carried out using copper oxide and cerium oxide supported on magnesium aluminate. Three compositions were tested, one containing 2% Cu and 12% $CeO_2$ the second containing 0.5% Cu and 12% CeO, and the third containing 1% Cu and 2% CeO. The first two catalysts were tested both after expoure to feed gas at 750 °C for 8-10 hours then after exposure to feed gas at 750 °C for 15 hours, 30 hours, and 75 hours respectively. The third catalyst mentioned above was tested only freshly prepared. It may be observed that the performance of the second-mentioned catalyst, containing only 0.5% Cu, deteriorated relatively quickly on increasing exposure to the feed gas (Runs 5, 6, 7), but recovered again after being allowed to cool in air (Run 8).

Fig.9 shows the results of experiments carried out using relatively-low proportions of copper, in the form of a reduced mixture of metallic copper and copper oxides as a result of preliminary exposure to hot feed gas ("pre-aging"). This pre-aging may also lead to other chemical changes, e.g. partial sintering, possible partial chemical interaction between the catalytic components and the support. Fig.9 also shows the use of other metals (also in the form of oxides) on an alumina support. Only the catalysts used in runs 2, 3, and 5 to 9 are within the scope of the invention. In all cases the percentage removal of NO is plotted against reaction temperature.

Run 1 shows that a catalyst comprising 1% of copper supported on alumina is relatively ineffective. As shown by Run 2, the addition to this of 1% nickel improves the effectiveness of the catalyst considerably, but Run 3 indicates that that catalyst deteriorated markedly on further ageing (i.e. exposure to feed gas). Run 4 showed that 1% nickel (without copper) supported on alumina had a relatively-high light-off temperature, and that 100% NO removal was achieved only at 600 °C. Although the catalyst used in Run 1 with the addition of 12% barium in the form of the oxide was initially very effective (Run 5), its effectiveness deteriorated markedly after further ageing (Run 6). On the other hand, the catalyst comprising 1% copper, 1% nickel, and 12% barium supported on alumina was both effective before and after further ageing (Runs 7 and 8 respectively). Run 9 showed that a catalyst consisting of 1% nickel and 12% barium supported on alumina was relatively ineffective.

These results show that the most effective of the catalysts tested was that used in Runs 7 and 8, containing the copper component and components from both Categories (i) and (ii) as defined above.

Fig. 10 shows the results of several runs utilizing a catalyst comprising 1% copper (in the form of a reduced mixture of metallic copper and copper oxide as a result of pre-ageing) supported on alumina to which various other metal oxides have been added. Once again, the percentage of NO removed from the feed gas is plotted against reaction temperature. Run 3 is outside the scope of the invention as no copper component was present in the catalyst used. It will be seen that the 1% copper, 1% nickel component supported on $MgAl_2O_4$ (Run 4) was shown to be particularly effective, even after further ageing (Run 5). This also applied to the 1% copper, 1% nickel, 3% cerium components supported on alumina (Runs 6 and 7). The catalyst used in Run 3, which contained no Cu component and is therefore outside the scope of the invention, was relatively ineffective.

Fig.11 shows, in Runs 1 to 4, the effectiveness of a catalyst consisting of 2% copper and 1% nickel supported on magnesium aluminate. In Run 1 the catalyst had been exposed to feed gas at 750 ° C for 8-10 hours and in Runs 2, 3 and 4 the catalyst had been aged at 750 ° C in air for respectively 15, 30 and 45 hours.

The catalysts according to the invention may be arranged to treat the exhaust gas in two successive stages and air may be introduced between the stages, so that the first stage takes place under reducing conditions and the second stage under oxidising conditions.

## Claims

1. A catalyst for the treatment of exhaust gases comprising a copper component comprising at least one copper oxide carried on a support, the catalyst also including at least one oxide from Category (i) and/or Category (ii), which categories are defined as follows:

(i) an oxide of a metal which is a lanthanide or a metal from Group IIa and/or IIb of the Mendeleev periodic table;

(ii) an oxide of a transition metal in a first oxidation state and in which the transition metal has a second, higher, oxidation state at an energy level close to that of the first oxidation state.

2. A catalyst according to Claim 1, wherein the copper component includes copper in a mixture of oxidation states $Cu^{\circ}$, $Cu^{I}$ and $Cu^{II}$.

3. A catalyst according to Claim 1 or Claim 2, wherein the support is finely-divided alumina.

4. A catalyst according to Claim 1 or Claim 2, wherein the support consists of or contains an oxide of Category (i).

5. A catalyst according to Claim 4, wherein the support comprises magnesium aluminate, or barium oxide, or a mixed cerium/barium oxide.

6. A catalyst according to any preceding claim, wherein of the total weight of the catalyst, up to about 8% comprises the copper component, from 8 to 12 per cent comprises one or more oxides from Category (i) and/or Category (ii), and the balance comprises alumina as support.

7. A catalyst according to Claim 2 which has been subjected to partial reduction so that copper initially present as $Cu^{II}$ is in a mixture of oxidation states $Cu^{\circ}$, $Cu^{I}$, and $Cu^{II}$.

8. A catalyst according to any preceding claim, wherein the transition metal oxide of Category (ii) is a cobalt oxide or a nickel oxide.

9. A catalyst according to any preceding claim containing at least 0.5% of copper component.

10. A catalyst according to Claim 9 containing from 1% - 2% of copper component.

11. A catalyst according to any preceeding claim, wherein the first and second oxidation states of the transition metal of Category (ii) have an energy difference not greater than 0.5 eV.

12. A catalyst according to any preceding claim, wherein the Category (i) oxide is an oxide of calcium, barium, yttrium, lanthanum, or cerium, or a mixed oxide of any of said metals with another metal.

13. A catalyst according to Claim 12, wherein the mixed oxide contains alumina.

14. A catalyst according to Claim 1 comprising the copper component and nickel oxide on a support.

15. A catalyst according to Claim 14, comprising from 1 to 2% of copper and from 2 to 1% of nickel.

16. A catalyst according to Claims 14 or 15 wherein the support is magnesium aluminate or alumina.

17. A catalyst according to Claim 1 comprising the copper component and barium oxide on an alumina support.

18. A catalyst according to Claim 17, comprising about 1% copper and about 12% barium.

19. A catalyst according to Claim 17 or 18, also containing nickel oxide.

20. A method of removing pollutants from exhaust gases from an internal combustion engine, comprising passing them through a catalyst according to any preceding claim.

21. A method of preparing a catalyst according to any of Claims 1 to 20, comprising depositing on the support nitrates of the metals of which the oxides are to form the other components of the catalyst and then decomposing the nitrates to the corresponding oxides by heating.

22. A method according to Claim 21, wherein the catalyst is exposed to reducing conditions so that the copper is present in a mixture of the oxidation states $Cu^{\circ}$, $Cu^{I}$ and $Cu^{II}$.

23. A method according to Claim 22, wherein said reducing conditions are achieved by exposing the catalyst to hot exhaust gases.

FIG. 1

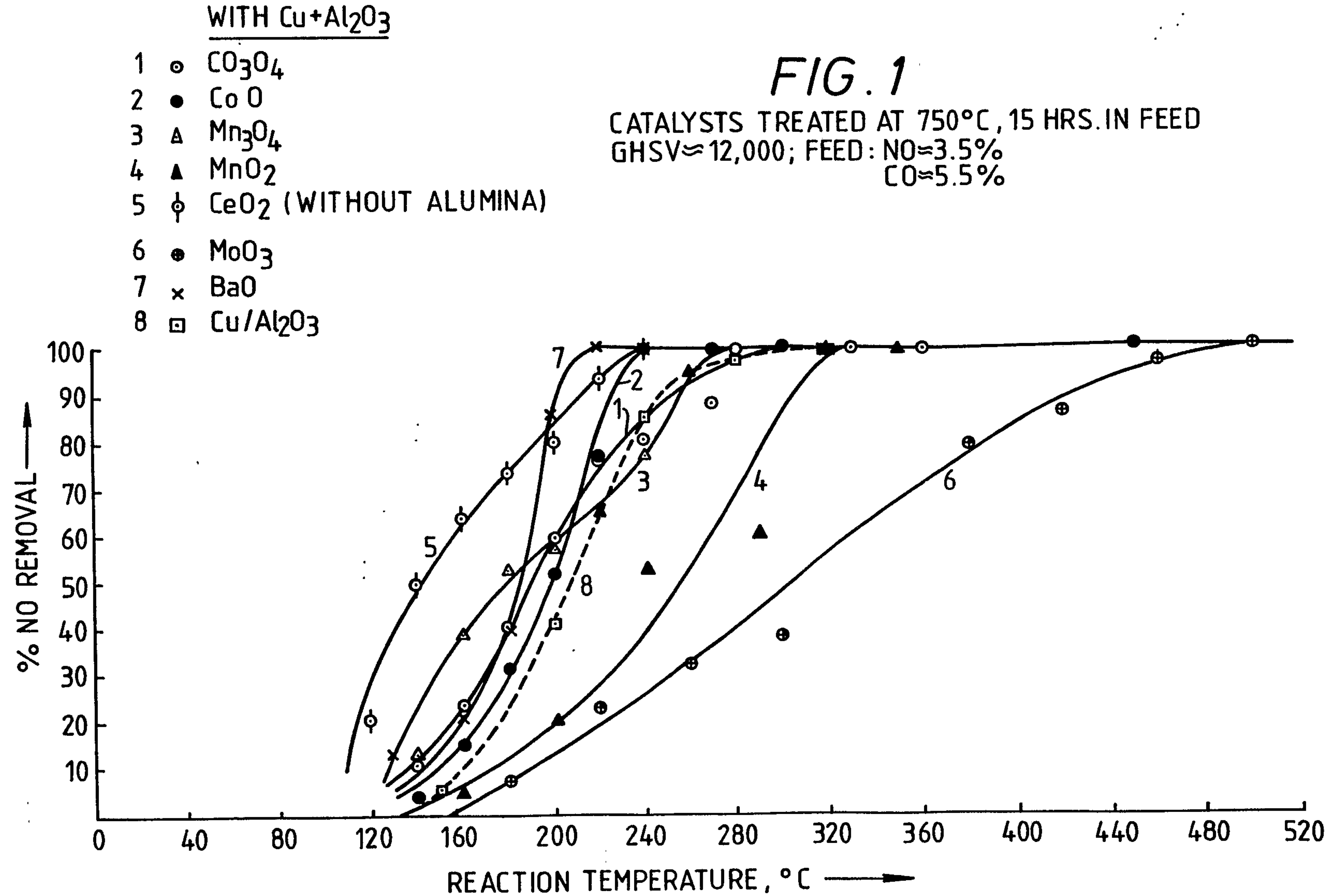
CATALYSTS TREATED AT 750°C, 15 HRS. IN FEED
GHSV≈12,000; FEED: NO≈3.5%
CO≈5.5%
WITH Cu+$Al_2O_3$
1 $CO_3O_4$
2 Co O
3 $Mn_3O_4$
4 $MnO_2$
5 $CeO_2$ (WITHOUT ALUMINA)
6 $MoO_3$
7 BaO
8 Cu/$Al_2O_3$
% NO REMOVAL
REACTION TEMPERATURE, °C
0 40 80 120 160 200 240 280 320 360 400 440 480 520
10 20 30 40 50 60 70 80 90 100

FIG. 2

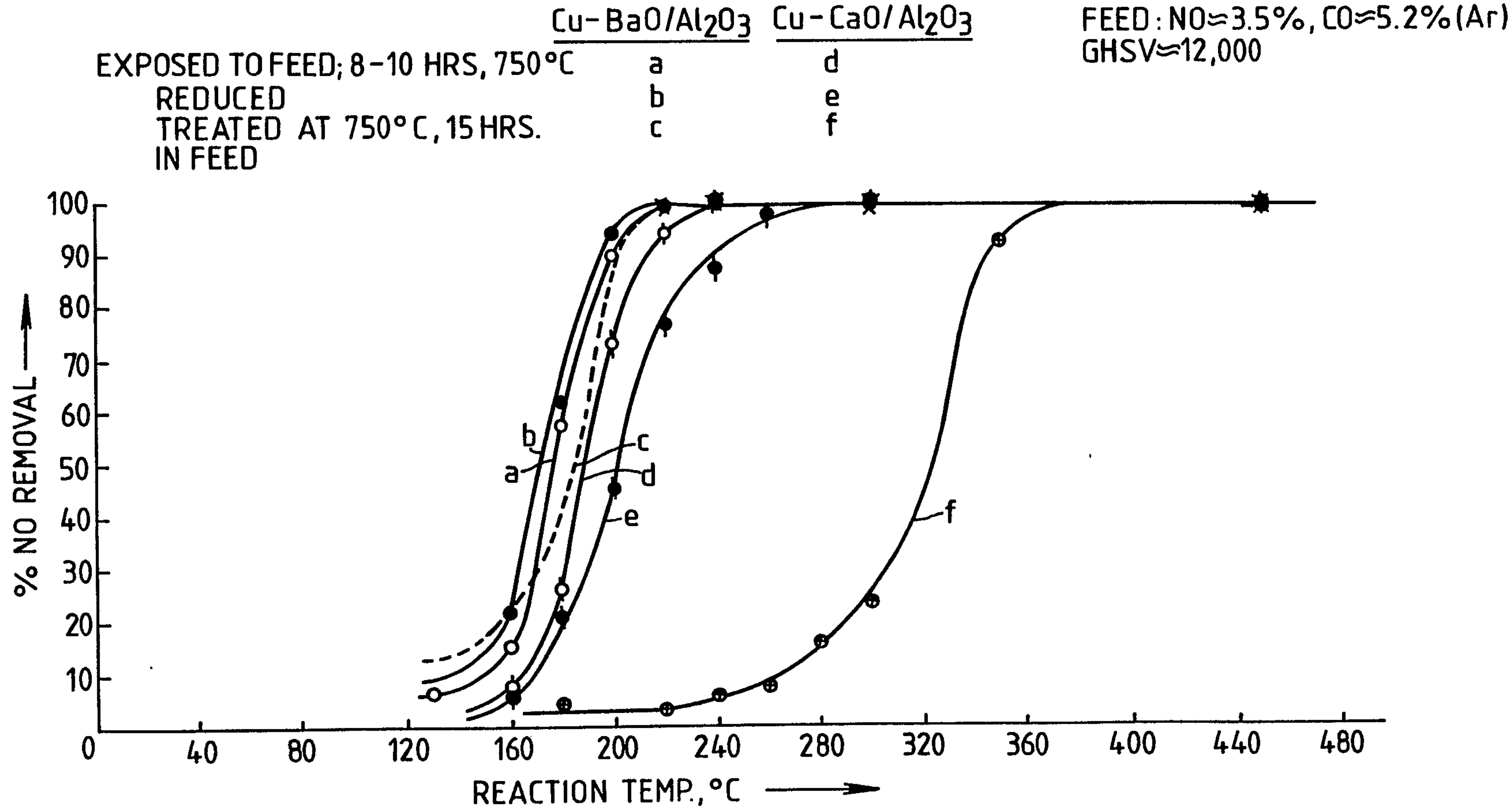
Cu-BaO/$Al_2O_3$
Cu-CaO/$Al_2O_3$
FEED: NO≈3.5%, CO≈5.2% (Ar)
GHSV≈12,000
EXPOSED TO FEED; 8-10 HRS, 750°C a d
REDUCED b e
TREATED AT 750°C, 15 HRS. IN FEED c f
% NO REMOVAL
100
90
80
70
60
50
40
30
20
10
0
40
80
120
160
200
240
280
320
360
400
440
480
REACTION TEMP., °C
a
b
c
d
e
f

Nouvellement déposé

FIG. 3

CATALYSTS TREATED AT 750°C IN FEED, 15 HRS.
GHSV≈100,000

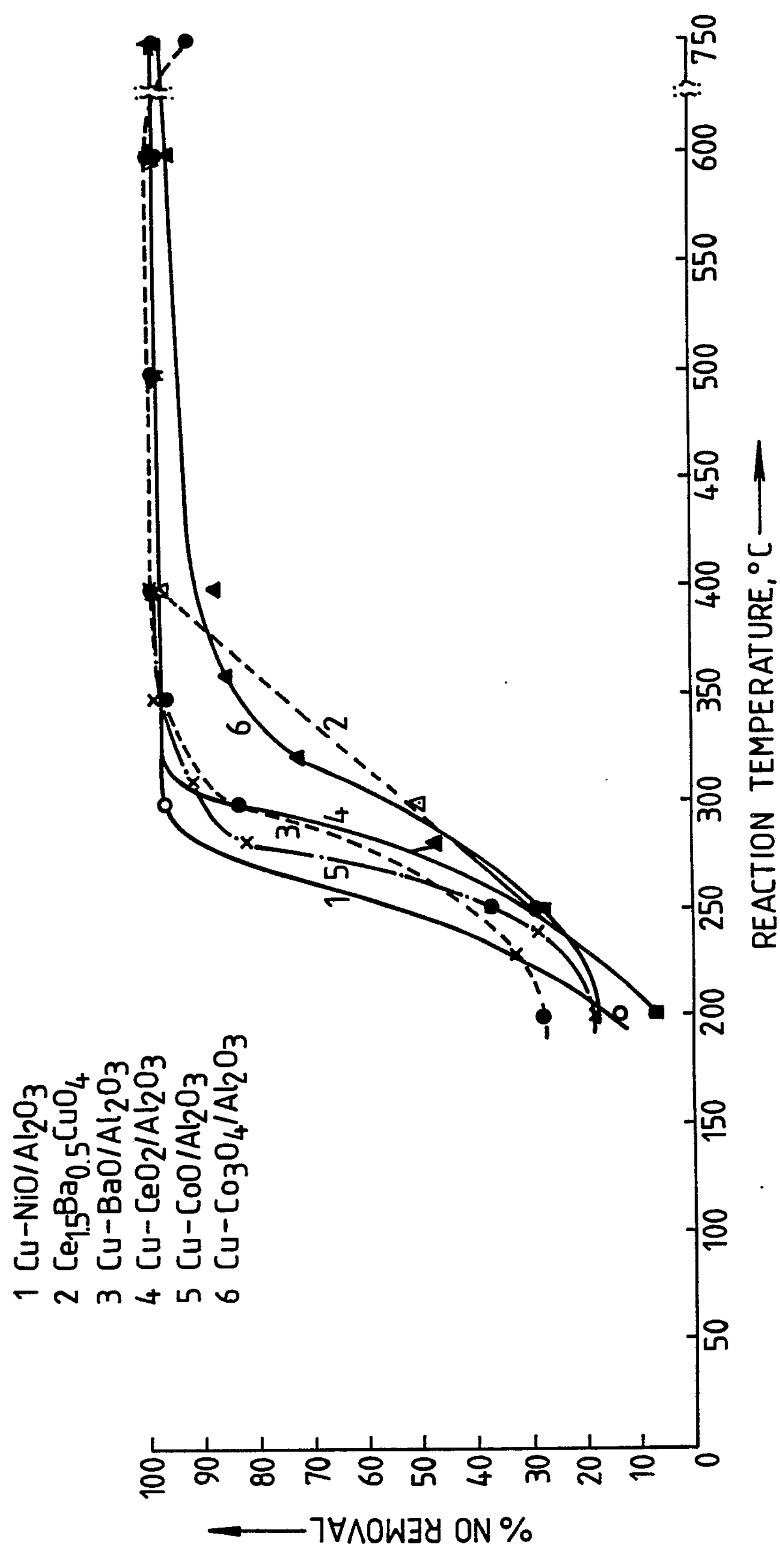

FIG. 4

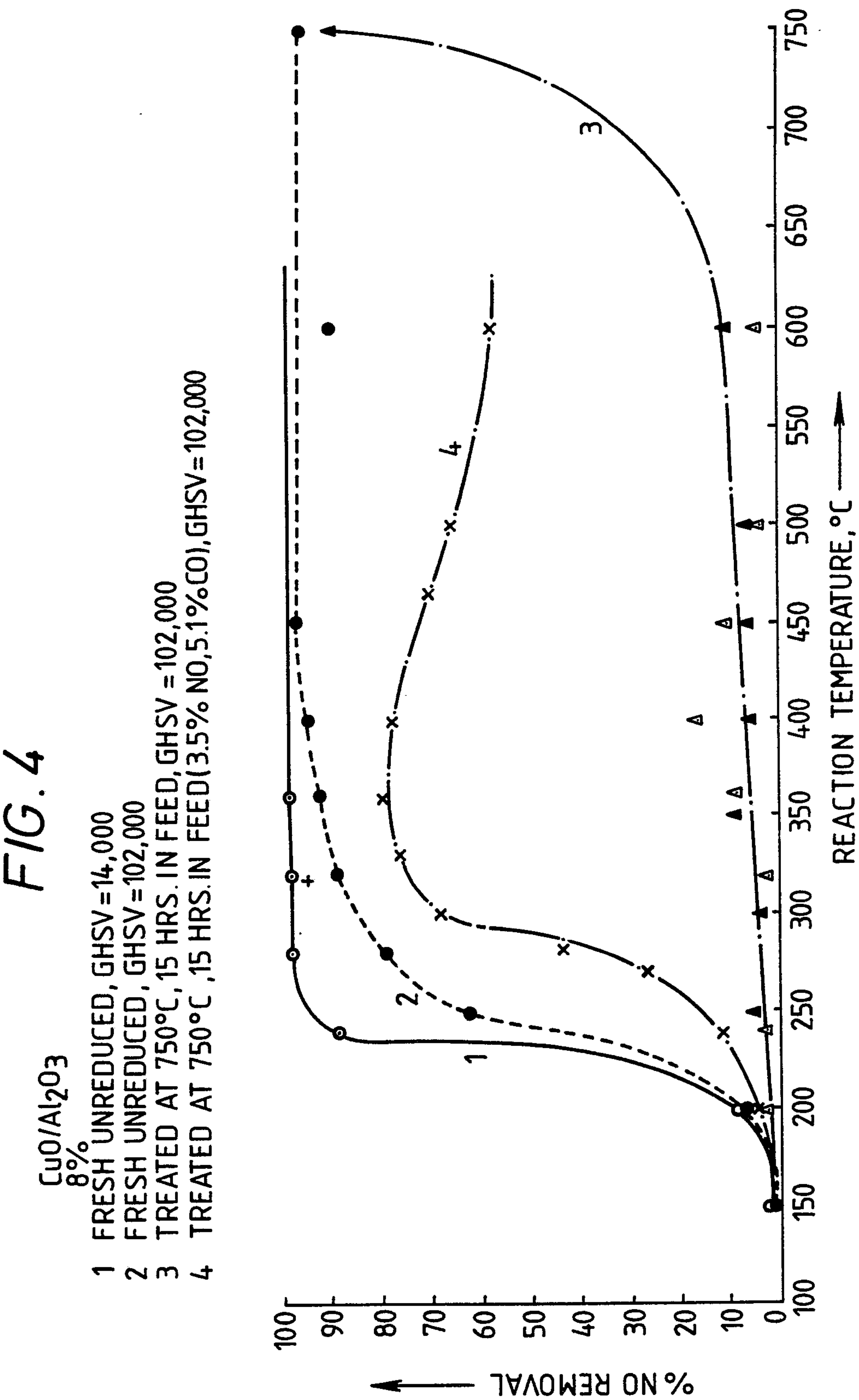
CuO/$Al_2O_3$
8%
1 FRESH UNREDUCED, GHSV = 14,000
2 FRESH UNREDUCED, GHSV = 102,000
3 TREATED AT 750°C, 15 HRS. IN FEED, GHSV = 102,000
4 TREATED AT 750°C, 15 HRS. IN FEED (3.5% NO, 5.1% CO), GHSV = 102,000
% NO REMOVAL
0
10
20
30
40
50
60
70
80
90
100
REACTION TEMPERATURE, °C
100
150
200
250
300
350
400
450
500
550
600
650
700
750
1
2
3
4

FIG. 5

GHSV = 102,000

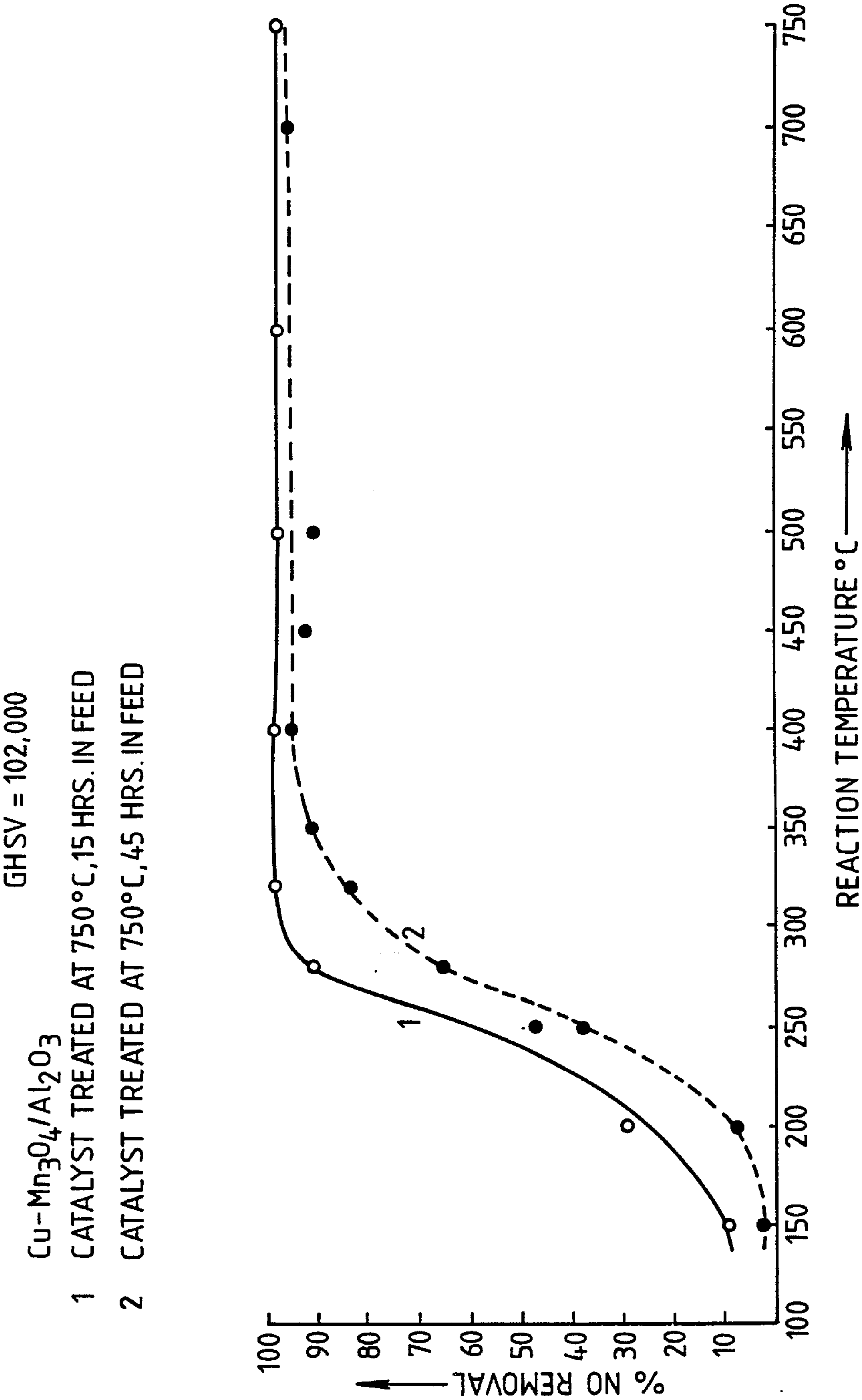

Neu eingereicht / Nouvellement déposé (R 35)

FIG. 6

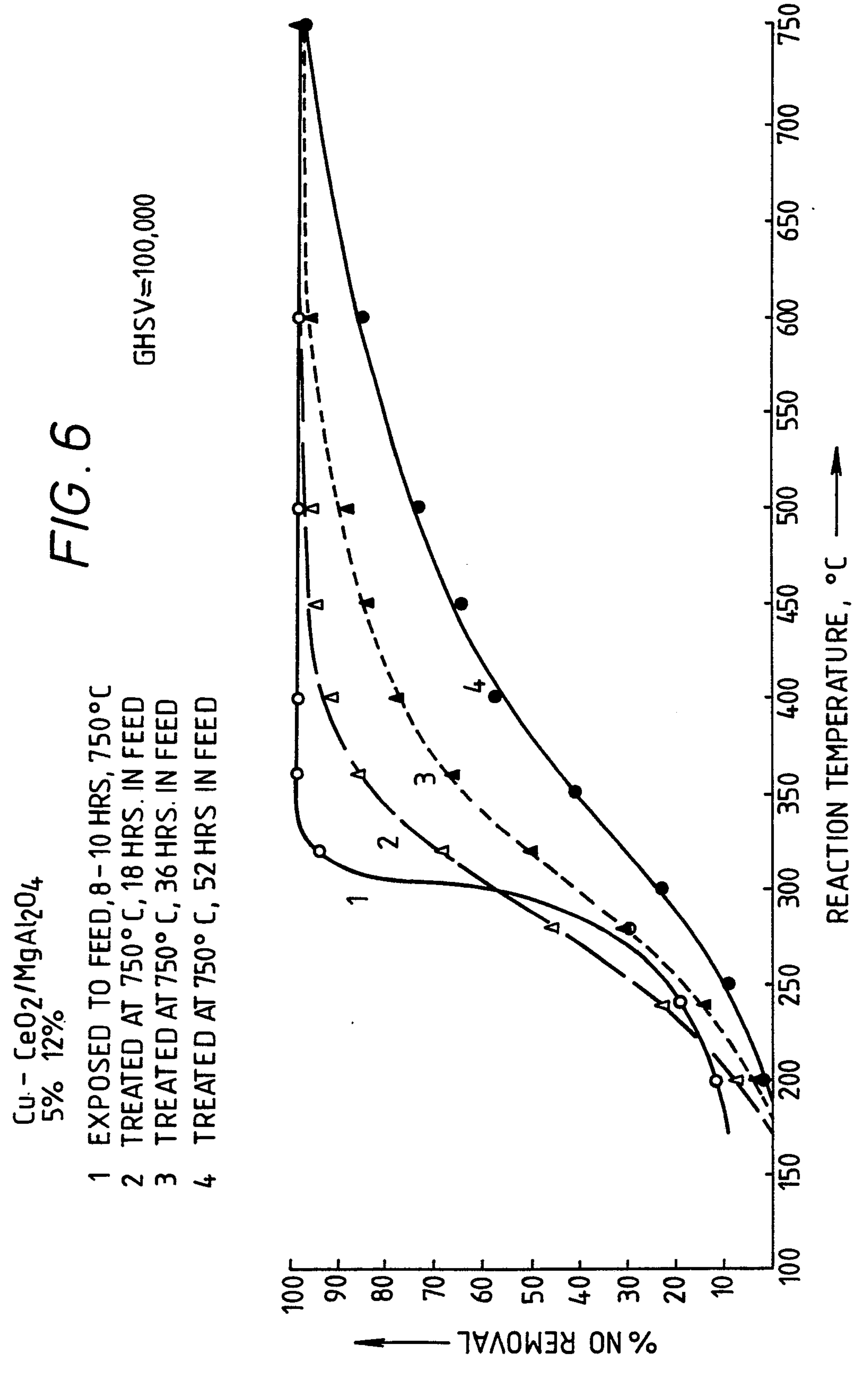

FIG. 7

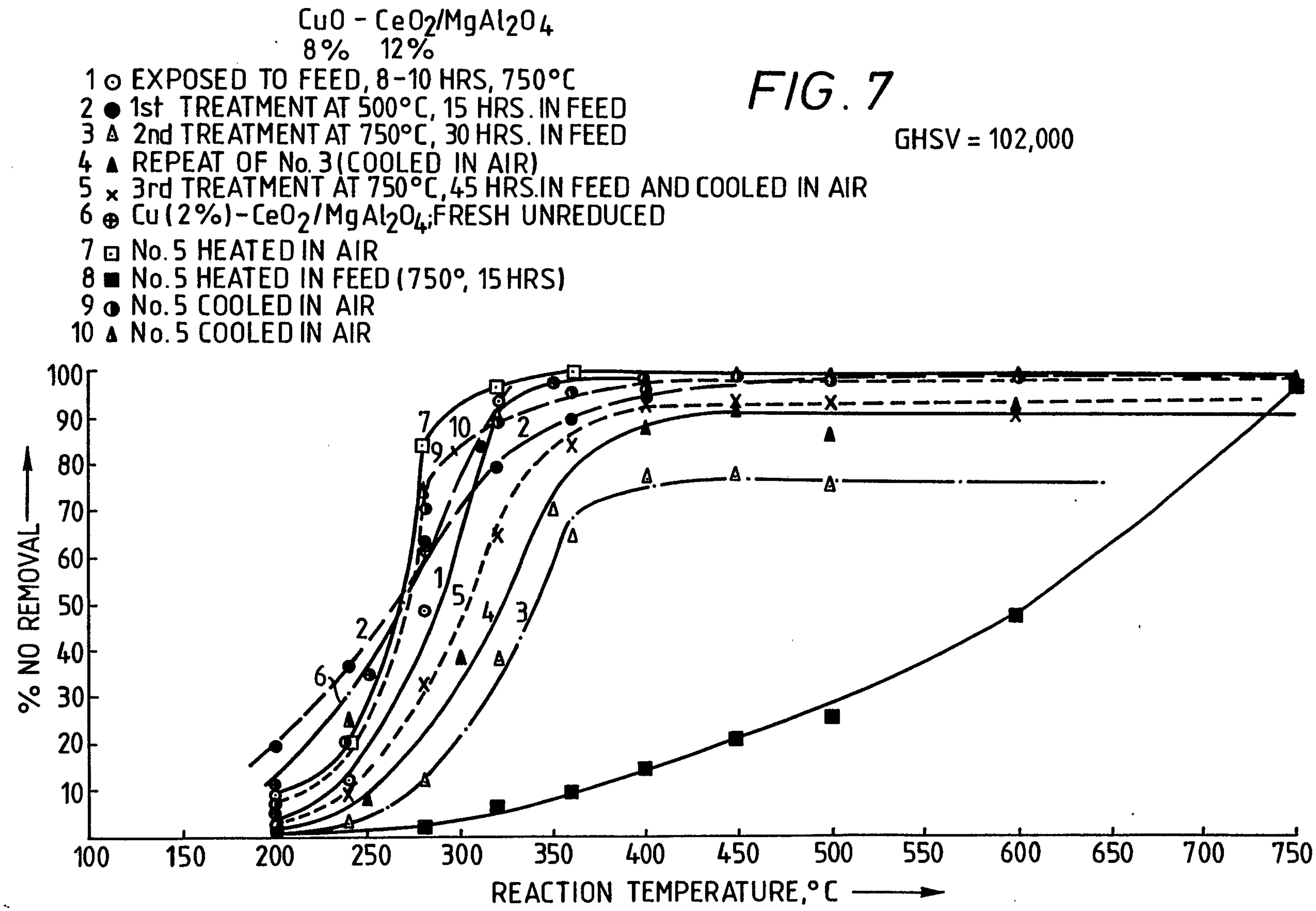
CuO - $CeO_2/MgAl_2O_4$
8% 12%
1 ⊙ EXPOSED TO FEED, 8-10 HRS, 750°C
2 ● 1st TREATMENT AT 500°C, 15 HRS. IN FEED
3 Δ 2nd TREATMENT AT 750°C, 30 HRS. IN FEED
4 ▲ REPEAT OF No. 3 (COOLED IN AIR)
5 × 3rd TREATMENT AT 750°C, 45 HRS. IN FEED AND COOLED IN AIR
6 ⊕ Cu (2%) - $CeO_2/MgAl_2O_4$; FRESH UNREDUCED
7 ⊡ No. 5 HEATED IN AIR
8 ■ No. 5 HEATED IN FEED (750°, 15 HRS)
9 ◐ No. 5 COOLED IN AIR
10 ▲ No. 5 COOLED IN AIR
GHSV = 102,000
% NO REMOVAL
REACTION TEMPERATURE, °C
100
90
80
70
60
50
40
30
20
10
100
150
200
250
300
350
400
450
500
550
600
650
700
750

# FIG. 8

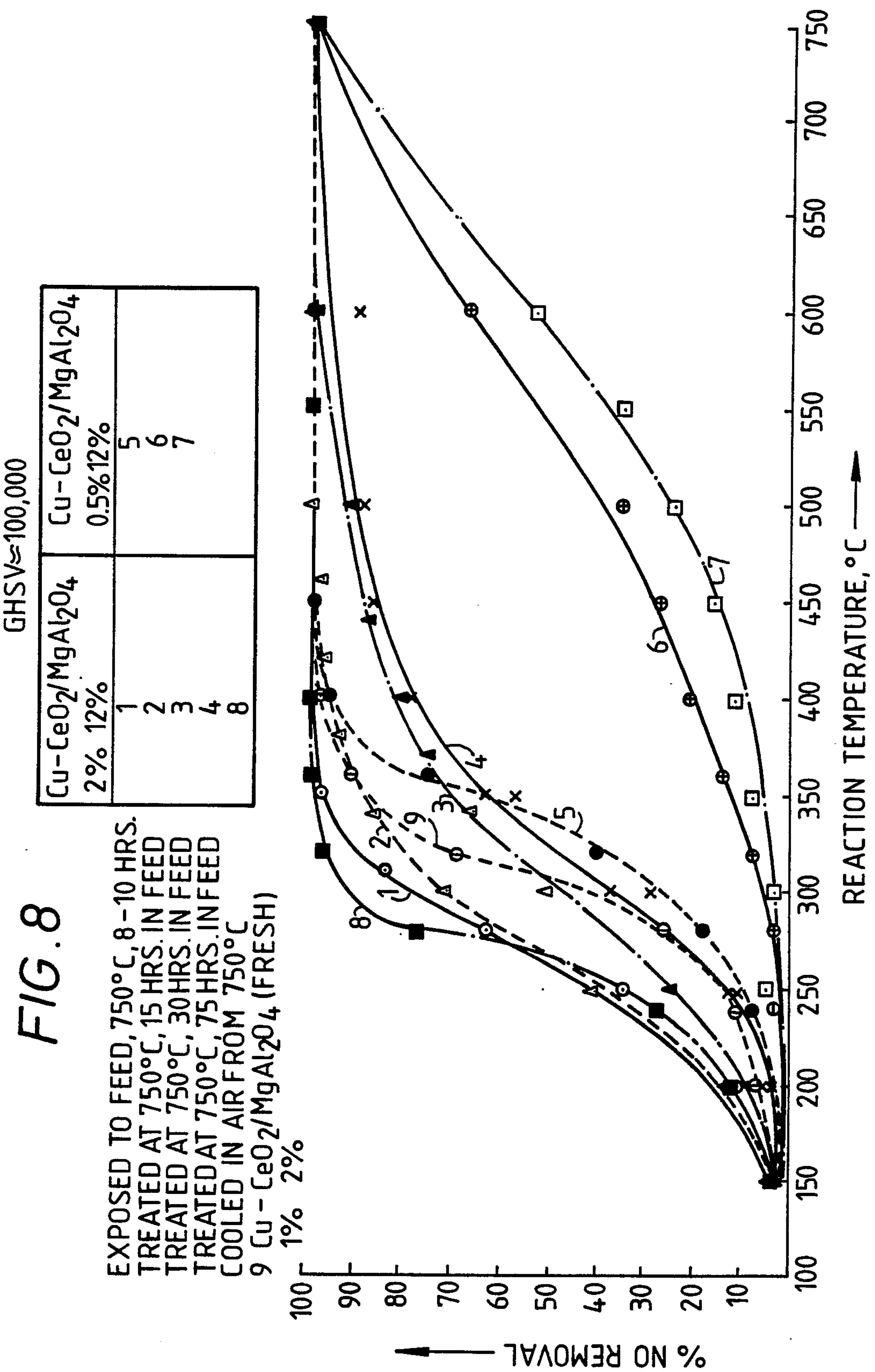
GHSV≈100,000
Cu-CeO$_2$/MgAl$_2$O$_4$
2% 12%
1
2
3
4
8
Cu-CeO$_2$/MgAl$_2$O$_4$
0.5% 12%
5
6
7
EXPOSED TO FEED, 750°C, 8-10 HRS.
TREATED AT 750°C, 15 HRS. IN FEED
TREATED AT 750°C, 30 HRS. IN FEED
TREATED AT 750°C, 75 HRS. IN FEED
COOLED IN AIR FROM 750°C
9 Cu-CeO$_2$/MgAl$_2$O$_4$ (FRESH)
1% 2%
% NO REMOVAL
100
90
80
70
60
50
40
30
20
10
100
150
200
250
300
350
400
450
500
550
600
650
700
750
REACTION TEMPERATURE, °C

FIG. 9

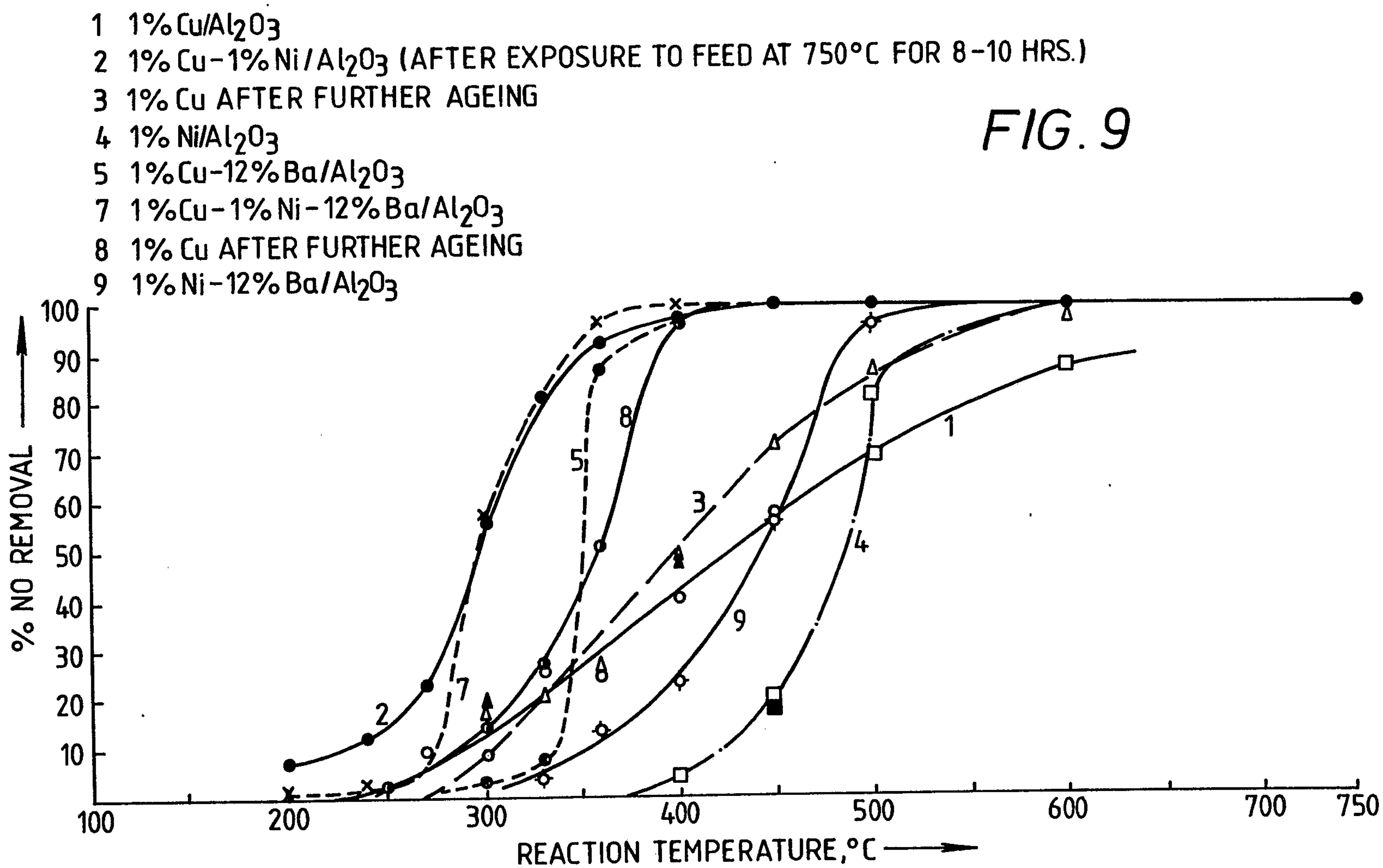
1 1% $Cu/Al_2O_3$
2 1% Cu-1% $Ni/Al_2O_3$ (AFTER EXPOSURE TO FEED AT 750°C FOR 8-10 HRS.)
3 1% Cu AFTER FURTHER AGEING
4 1% $Ni/Al_2O_3$
5 1% Cu-12% $Ba/Al_2O_3$
7 1% Cu-1% Ni-12% $Ba/Al_2O_3$
8 1% Cu AFTER FURTHER AGEING
9 1% Ni-12% $Ba/Al_2O_3$
% NO REMOVAL
100
90
80
70
60
50
40
30
20
10
100
200
300
400
500
600
700
750
REACTION TEMPERATURE,°C
1
2
3
4
5
7
8
9

Neu eingereicht / Nouvellement déposé (R 35)

FIG.10

1 1% Cu-3% Ba/$Al_2O_3$
2 1% Cu-1% Ni-3% Ba/$Al_2O_3$
3 1% Ni/$MgAl_2O_4$
4 1% Cu-1% Ni/$MgAl_2O_4$
5 1% Cu AFTER FURTHER AGEING
6 1% Cu-1% Ni-3% Ce/$Al_2O_3$
7 1% Cu AFTER FURTHER AGEING
8 No.2 AFTER FURTHER AGEING
14 1% Cu-1% Ni/$MgOAl_2O_3$

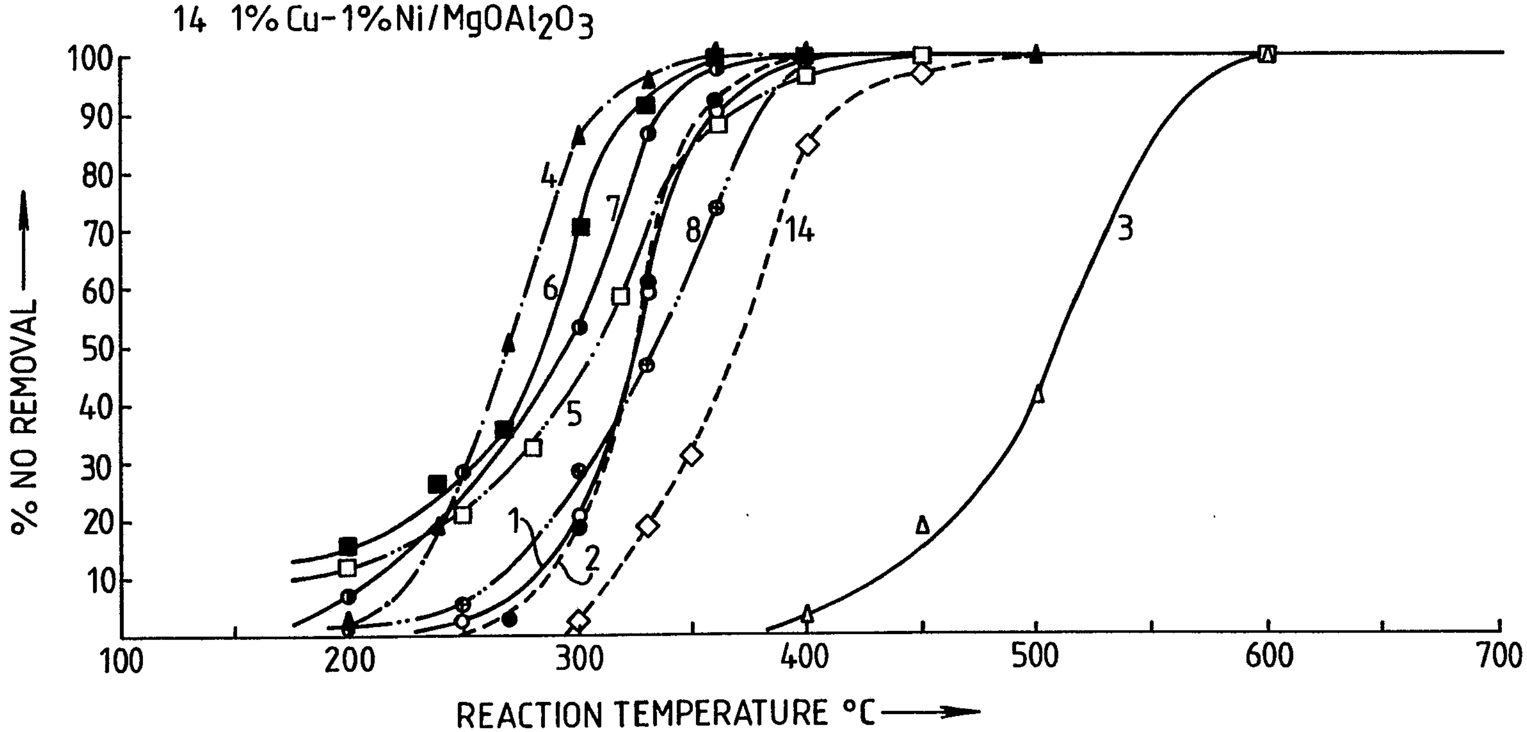

FIG. 11

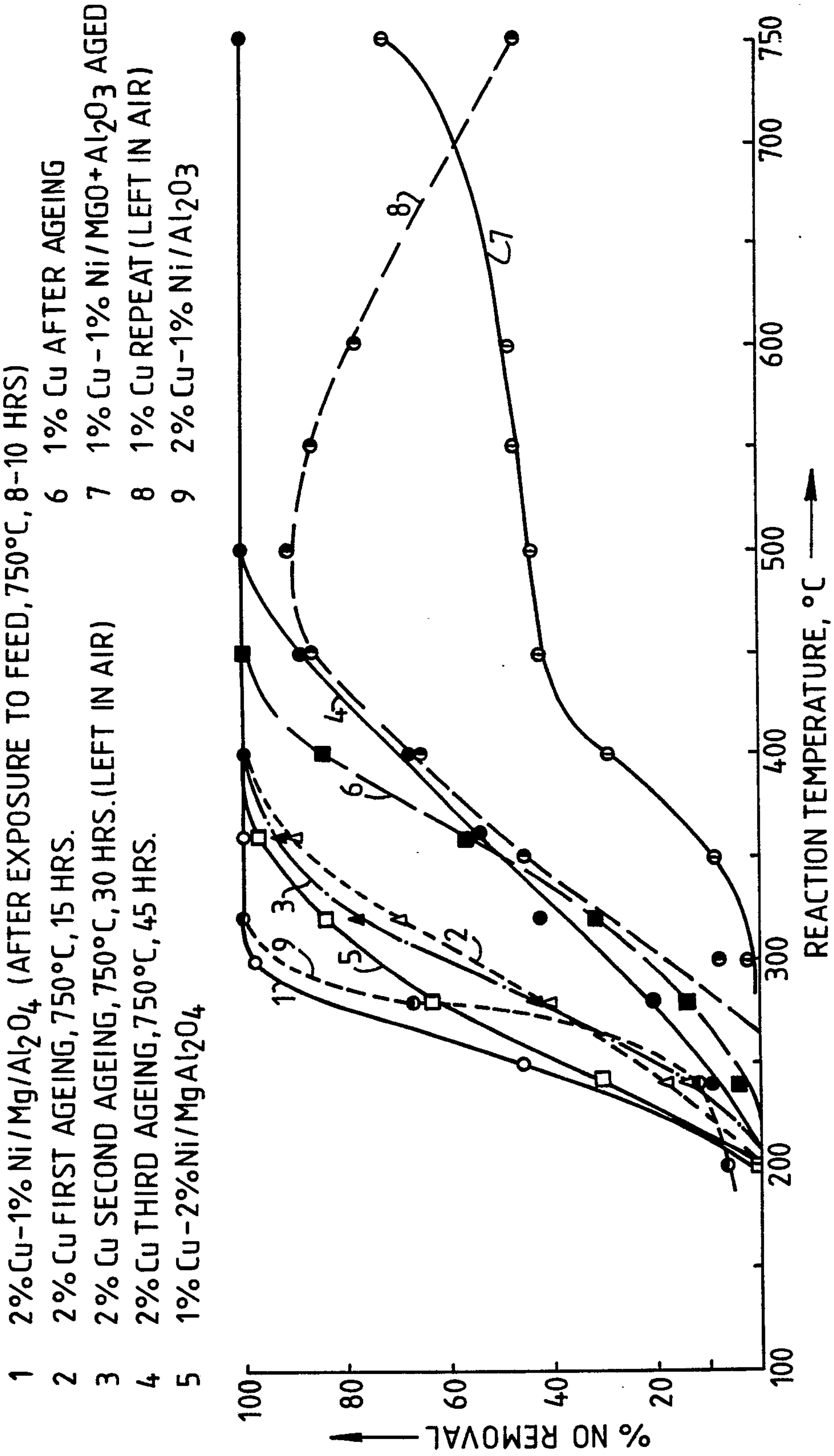
1 2% Cu-1% Ni/Mg/Al$_2$O$_4$ (AFTER EXPOSURE TO FEED, 750°C, 8-10 HRS)
2 2% Cu FIRST AGEING, 750°C, 15 HRS.
3 2% Cu SECOND AGEING, 750°C, 30 HRS. (LEFT IN AIR)
4 2% Cu THIRD AGEING, 750°C, 45 HRS.
5 1% Cu-2% Ni/MgAl$_2$O$_4$
6 1% Cu AFTER AGEING
7 1% Cu-1% Ni/MGO+Al$_2$O$_3$ AGED
8 1% Cu REPEAT (LEFT IN AIR)
9 2% Cu-1% Ni/Al$_2$O$_3$
% NO REMOVAL
100
80
60
40
20
100
200
300
400
500
600
700
750
REACTION TEMPERATURE, °C

European Patent Office

**PARTIAL EUROPEAN SEARCH REPORT**
which under Rule 45 of the European Patent Convention shall be considered, for the purposes of subsequent proceedings, as the European search report

Application number
EP 89 31 0705

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 865 923 (R.E. STEPHENS) | | B 01 D 53/36<br>B 01 J 23/74<br>B 01 J 23/76<br>B 01 J 23/78 |
| | * Whole document * | 1,3,4,12,20,21 | |
| | -- | | |
| X | US-A-3 842 158 (R.C. HANSFORD) | | |
| | * Whole document * | 1,2,3,8,20 | |
| A | | 7,9,10 | |
| | -- | | |
| X | EP-A-0 210 681 (SHELL) | | |
| | * Examples * | 1,5,8,20 | |
| A | | 9,10 | |
| | -- ./. | | |

TECHNICAL FIELDS SEARCHED (Int. Cl.4)

B 01 D
B 01 J

## INCOMPLETE SEARCH

The Search Division considers that the present European patent application does not comply with the provisions of the European Patent Convention to such an extent that it is not possible to carry out a meaningful search into the state of the art on the basis of some of the claims.

Claims searched completely:
Claims searched incompletely:
Claims not searched:
Reason for the limitation of the search:

Claims speaking about group IIb of Periodic Table. i.a. Page 2 (line 23) stopulates: group IIb - Yttrium , Lanthanum.
IIb should therefore be: group IIIb;
Search has been performed as of applicant should have written: group IIIb.

| Place of search | Date of completion of the search | Examiner |
|---|---|---|
| The Hague | 30-01-1990 | BOGAERTS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# PARTIAL EUROPEAN SEARCH REPORT

Application number
EP 89 31 0705



| DOCUMENTS CONSIDERED TO BE RELEVANT | | | CLASSIFICATION OF THE APPLICATION (Int. Cl.4) |
|---|---|---|---|
| Category | Citation of document with indication, where appropriate, of relevant passages | Relevant to claim | |
| A | FR-A-2 059 443 (DEGUSSA)<br>-- | | |
| A | FR-A-2 238 523 (SOC. FRANCAISE DES PRODUITS POUR CATALYSE "PROCA-TALYSE")<br>-- | | |
| A | US-A-3 894 140 (ABE WARSHAW)<br>------ | | |
| | | | TECHNICAL FIELDS SEARCHED (Int Cl.4) |